# EUROPEAN PATENT APPLICATION

(11) **EP 4 321 233 A1**
(43) Date of publication of application: **14.02.2024**
(21) Application number: 23182339.4
(22) Date of filing: 29.06.2023
(51) Int. Cl.: B01D 46/24, B01D 46/42

(54) **SOUND ATTENUATOR FOR A SEPARATOR DEVICE FOR GAS AND SEPARATOR DEVICE**

(30) Priority: 09.08.2022 DE 102022120076
(71) Applicant: MANN+HUMMEL GmbH, 71636 Ludwigsburg (DE)
(72) Inventor: LANGE, Lukas, 68161 Mannheim (DE); BANGALORE PANNEERSELVAM, Mohan, 67346 Speyer (DE); THONTARADHYA, Srinivasa, 560090 Bengaluru (IN); HANISCH, Robert, 71686 Remseck (DE)
(74) Representative: Mann + Hummel Intellectual Property

(57) **Abstract**

A sound attenuator (26) for a separator device (22) for gas and a separator device (22) are described. The sound attenuator (26) comprises at least one tubular member (36) having at least one gas inlet opening (40) in the area of one end and at least one gas outlet opening (42) in the area of the other end. The at least one gas outlet opening (42) is placed in the circumferential wall (44) of the at least one tubular member (36) near the one end and the end face at this end of the at least one tubular member (36) is closed by a closing part (46).

## Description

### Technical Field

The invention relates to a sound attenuator for a separator device for gas, comprising at least one tubular member having at least one gas inlet opening in the area of one end and at least one gas outlet opening in the area of the other end.

Further, the invention relates to a separator device for gas, comprising at least one separating medium surrounding an interior of the separator device and at least one sound attenuator serving as a gas conduit to the interior, where the sound attenuator comprising at least one tubular member having at least one gas inlet opening in the area of one end and at least one gas outlet opening in the area of the other end, where the at least one tubular member extends at least partly into the interior of the separator device.

### State of Art

From US 2014/0102304 A1 an air filter assembly for an engine is known. The air filter assembly includes a filter element, a sound attenuation member and an end cap. The filter element may be a cylindrical filter element defining a hollow interior. The sound attenuation member may extend into the hollow interior of the cylindrical filter element. The sound attenuation member may include a flange at a first end thereof. The flange may have a diameter greater than a diameter of the hollow interior. The end cap may be secured to the cylindrical filter element and may function to fix the sound attenuation member relative to the filter member. The sound attenuation member is operative for reducing engine noise travelling through the air filter assembly.

EP1068890 A1 describes an inertial gas-liquid separator having a housing with an inlet for receiving a gas stream, and an outlet for discharging the gas stream, and further comprising a collector for collecting liquid that is separated from the gas by a collection surface.

WO2008/108538 A1 describes a silencer, which is coupled to a pneumatic device to reduce noise, the silencer having a double pipe structure.

It is an objective of the invention to provide a sound attenuator and a separator device in which a reduction in noise caused by gas flowing through the separator device can be improved.

### Disclosure of the Invention

The objective of the invention is achieved with the sound attenuator in that the at least one gas outlet opening is placed in the circumferential wall of the at least one tubular member near the one end and the end face at this end of the at least one tubular member is closed by a closing part.

According to the invention, a closing part is realized at the end of the at least one tubular member. The closing part prevents a gas flow through the end of the at least one tubular member in axial direction. The at least one gas outlet opening is placed in the circumferential wall of the at least one tubular member. In this way, the gas flow in the at least one tubular member is diverted to the side. This effectively reduces the noise generation.

According to a favorable aspect, the surface of the closing part facing the at least one gas inlet opening may be flat and/or the closing part may be made in one piece with the at least one tubular member.

Advantageously, the surface of the closing part facing the at least one gas inlet opening may be flat. In this way, the shape of the closing part can positively influence the gas flow in terms of noise reduction.

Alternatively or additionally, the closing part may be made in one piece with the at least one tubular part. In this way, the manufacture of the sound attenuator and/or the combination of the sound attenuator with other parts of the separator device can be simplified.

According to another favorable aspect, multiple gas outlet openings may be arranged in a circumferential wall of the tubular member and/or at least two gas outlet openings may be arranged at opposite sides of a circumferential wall of the tubular member and/or at least two gas outlet openings may have the same size and/or shape and/or opening area.

Advantageously, multiple gas outlet openings may be arranged in the circumferential wall. With multiple gas outlet openings, the flow cross-section for the gas can be increased. Alternatively or additionally, multiple gas outlet openings can be arranged uniformly in the circumferential wall. This can improve a uniform gas discharge from the tubular member in terms of noise reduction.

Alternatively or additionally, at least two gas outlet openings may be arranged at opposite sides of the circumferential wall. In this way, the gas flow can be better divided.

Alternatively or additionally, at least two gas outlet openings may have the same size and/or shape and/or opening area. In this way, a uniform gas flow velocity through the gas outlet openings can be realized.

According to another favorable aspect at least one gas inlet opening may be arranged at the end face of the at least one tubular member. In this way, the gas can flow in axial direction into the at least one tubular member.

According to another favorable aspect, the at least one tubular member may have a circular internal cross-section. In this way, the at least one tubular member can easier be realized as a body of revolution.

Alternatively, the at least one tubular member may have a noncircular internal cross-section, in particular an oval or elliptic internal cross-section.

According to another favorable aspect, the at least one tubular member may have a reduction of the internal cross-section when viewed from the at least one gas inlet opening to the at least one gas outlet opening. In this way, the flow velocity can be increased in gas flow direction downstream the at least one inlet opening.

According to another favorable aspect, the at least one tubular member may at least partly have a constant internal cross-section and/or the internal cross-section of the at least one tubular member may decrease in at least a portion of the tubular member viewed from the at least one gas inlet opening to the at least one gas outlet opening.

Advantageously, the at least one tubular member may at least partly have constant internal cross-section. In this way, a uniform gas flow in this part of the at least one tubular member can be realized.

Additionally or alternatively, the internal cross-section of the at least one will member may decrease in at least a portion of the tubular member viewed from the at least one gas inlet opening to the at least one gas outlet opening. In this way, the flow velocity can be decreased and flow direction.

According to another favorable aspect, the at least one tubular member may comprise a connection member for connecting to an end member, in particular an end plate, of the separator device and/or the at least one tubular member may be connected, in particular connected in one piece, to an end member, in particular an end plate, for the separator device.

Advantageously, the at least one tubular member may comprise a connection member. With the connection member the at least one tubular member may be connected to an end member, in particular an end plate, of the separator device. In this way, the at least one tubular member may be securely connected to the end member. An end member, in particular an end plate, can be arranged at an end side of a separation medium, for example filter paper, or the like. The end member can be used to cover the separation medium at the end side.

Additionally or alternatively the at least one tubular member may be connected to an end member. In this way, the at least one tubular member and the end member can be preassembled. In particular, the at least one tubular member may be connected in one piece to the end member via the connection member. In this way, the production can be simplified.

According to another favorable aspect, a total area of the gas outlet openings may be between 0,2 and 3 times the area of the at least one gas inlet opening. In this way, a pressure in the interior of the at least one tubular member can be optimized in terms of noise reduction.

Advantageously, a width of the at least one gas outlet opening may be chosen to minimize pressure loss.

Advantageously, a ratio between an interior length and an interior diameter of the at least one tubular member may be chosen for optimal noise reduction.

Further the objective of the invention is achieved with the separator device in that the at least one sound attenuator is a sound attenuator according to the invention.

According to the invention, a closing part is realized at the end of the at least one tubular member of the sound attenuator. The closing part prevents a gas flow through the end of the at least one tubular member in axial direction. The at least one gas outlet opening is placed in the circumferential wall of the at least one tubular member. In this way, the gas flow in the at least one tubular member is directed to the side. This effectively reduces the noise generation.

According to a favorable aspect, the at least one sound attenuator may be a separate part attached to an end member, in particular an end plate, covering the at least one separating medium, or the at least one sound attenuator may be in one piece with an end member, in particular an end plate, covering the at least one separation medium.

Advantageously, the at least one sound attenuator may be a separate part. In this way the at least one sound attenuator can be produced separate from the other parts of the separator device.

Alternatively, the at least one sound attenuator may be in one piece with an end member. In this way, a secure connection between the at least one example the end member can be realized. The end member may be arranged together with the at least one sound attenuator on at least one separation medium of the separator device.

According to another favorable aspect, the separator device may be a gas de-oiling device, preferably embodied as an exchangeable filter element or filter insert, in particular an air de-oiling device, and/or the separator device may be an air de-oiling device for an air compressor or a vacuum pump. In this way, the separator device can be used for separate oil in a gas flow, in particular in an airflow. The filter media of the separator device may be configured as a coalescing filter media, preferably comprising glass fibers, which can be wound around and/or onto a permeable center tube.

Otherwise, the features and advantages shown in connection with the sound attenuator according to the invention and the separator device according to the invention and their respective advantageous configurations shall apply mutatis mutandis to each other and vice versa. The individual features and advantages can, of course, be combined with each other, whereby further advantageous effects can occur which go beyond the sum of the individual effects.

### Brief description of the Drawings

Further advantages, features and details of the invention result from the following description, in which the invention is explained in more detail with reference to the drawing. The skilled person will expediently consider the features disclosed in combination in the drawing, the description and the claims also individually and combine them to form useful further combinations. The following is shown schematically:
- Figure 1: a functional diagram of a vacuum pump with two air de-oiling devices comprising a sound attenuator each;
- Figure 2: an isometric view of an air de-oiling device with a sound attenuator according to a first aspect, which can be used with the vacuum pump of figure 1;
- Figure 3: a longitudinal section of the air de-oiling device with the sound attenuator of figure 2;
- Figure 4: a longitudinal section of the sound attenuator of figures 2 and 3;
- Figure 5: an isometric view of the sound attenuator of figure 4 with view to the inlet side;
- Figure 6: an isometric view of the sound attenuator of figure 4 with view to the outlet side;
- Figure 7: a longitudinal section of an air de-oiling device with a sound attenuator which can be used with the vacuum pump of figure 1;
- Figure 8: a longitudinal section of the sound attenuator of figure 7;
- Figure 9: an exploded view of an air de-oiling device with a sound attenuator according to a third aspect, which can be used with the vacuum pump of figure 1.

In the figures, identical components are given the same reference signs.

### Embodiment(s) of the Invention

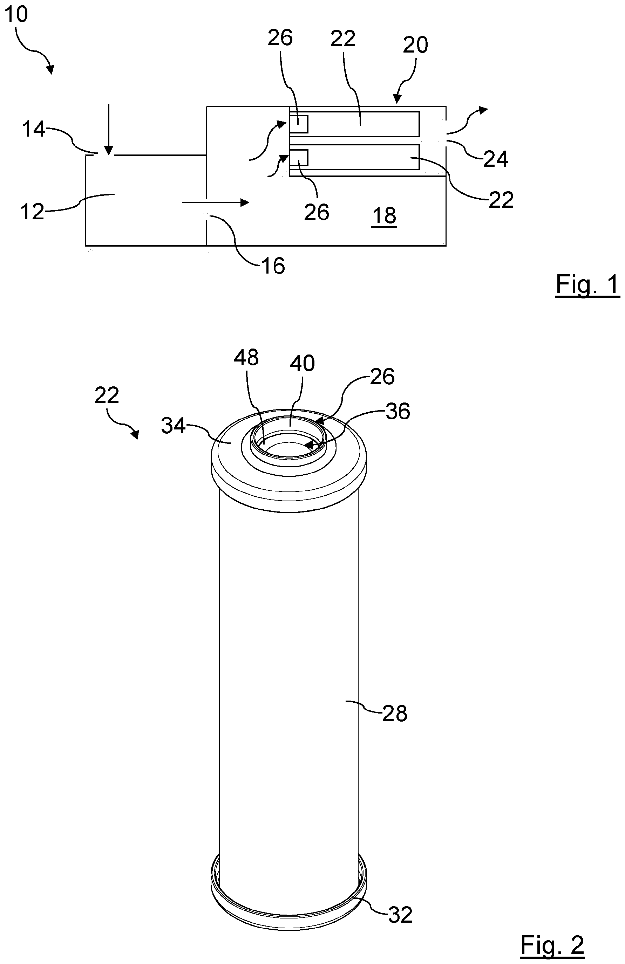

In figure 1 a functional diagram of a vacuum pump 10 is depicted. The vacuum pump 10 comprises a motor 12 with a motor air inlet 14 and a motor air outlet 16.

Air is sucked by the motor 12 through the motor air inlet 14 to create a vacuum. There is oil in the motor 12 to avoid friction. The air sucked in and the oil are compressed together. The air-oil-mixture leaves the motor 12 through the motor air outlet 16. The flow path of the air is indicated in the figures by curved arrows.

The air-oil-mixture is passed through an intermediate space 18 to an air de-oiling stage 20.

The air de-oiling stage 20 comprises two separator devices in form of air de-oiling devices 22. The air de-oiling devices 22 are connected parallel. The air-oil-mixture passes through the air de-oiling devices 22 where the oil is separated. The clean air leaves the vacuum pump 10 through the pump air outlet 24.

As air passes through the air de-oiling devices 22, it generates noise. To reduce the noise, each air de-oiling device 22 comprises a sound attenuator 26.

An air de-oiling device 22 according to a first aspect, which can be used with the vacuum pump 10 of figure 1, and its components are depicted in figures 2 to 6.

The air de-oiling device 22 is preferably embodied as an exchangeable filter element.

The air de-oiling device 22 comprises a separating medium for example in form of filter medium 28. The filter medium 28 is surrounding an interior 30 of the air de-oiling device 22. It is preferably wound in multiple layers around a center tube 29.

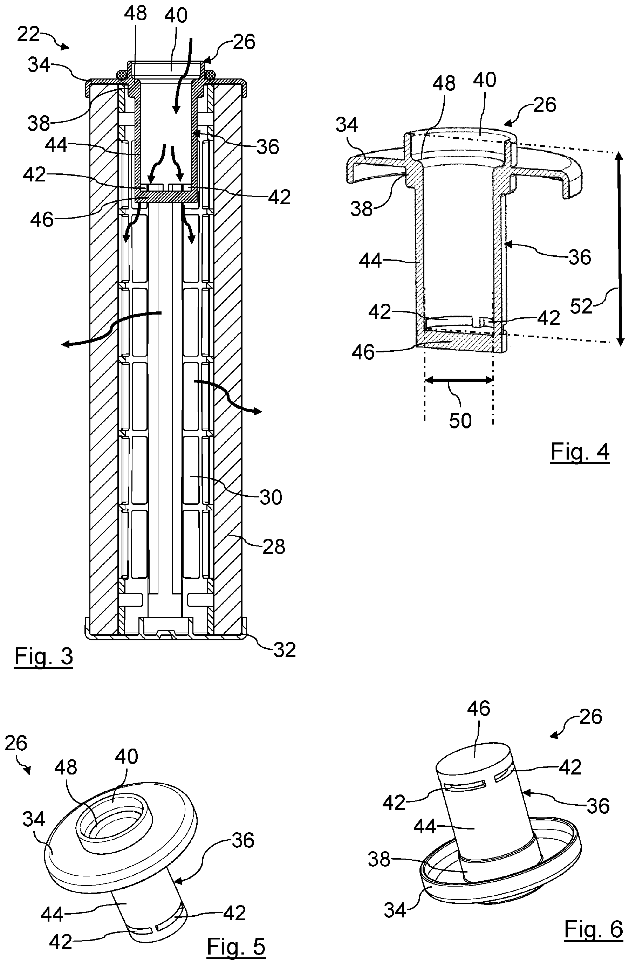

At one end face of the filter medium 28, in figure 3 below, an end member in form of a continuous end plate 32 is attached to the filter medium 28. The continuous end plate 32 is closing the interior 30 there.

At the other end face, in figure 3 above, an end member in form of an inlet end plate 34 is attached to the filter medium 28. The inlet and plate 32 is combined with the sound attenuator 26. The sound attenuator 26 serves as a conduit for the air to be cleaned, in particular the air-oil-mixture.

The air to be cleaned passes through the sound attenuator 26 into the interior 30. From the interior 30, the air to be cleaned flows through the filter medium 28, where the oil separates. The clean air leaves the filter medium 28 on the circumferential side.

The sound attenuator 26 is preferably manufactured in one piece with the inlet end plate 34. The sound attenuator 26 comprises a tubular member 36. The tubular member 36 has a connection member 38 in form of a step 48 on its outer circumferential side. With the connection member 38 the tubular member 36 is connected to the inlet end plate 34.

The tubular member 36 extends into the interior 30 of the air de-oiling device 22. The axial length of the tubular member 36 projecting into the interior 30 of the air de-oiling device 22 may be less than half, especially less than 40% and preferably less than 30% of the length of the air de-oiling device 22. The axial length of the tubular member 36 projecting into the interior 30 of the air de-oiling device 22 preferably has a minimum length of 2 cm or 3 cm, preferably of 5 cm. The axial length of the tubular member 36 projecting into the interior 30 of the air de-oiling device 22 preferably has a minimum length of 10% and preferably of 20% of the length of the air de-oiling device 22. In absolute terms, for air de-oiling devices 22 with an overall length of about 25 cm to 50 cm, the length of the tubular member 36 preferably is in a range of 2 cm to 25 cm.

The tubular member 36 has an air inlet opening 40 in the area of one end. The air inlet opening 40 is arranged at the end face of the tubular member 36.

In the area of the other end the tubular member 36 has for example four air outlet openings 42. The air outlet openings 42 are placed in a circumferential wall 44 of the tubular member 36 near the end of the tubular member 36. Each two of the air outlet openings 42 are arranged at opposite sides of the circumferential wall 44.

The four air outlet openings 42 have the same size, shape and opening area. Each air outlet opening 42 has a form of a rectangular slot extending in the circumferential direction. A total area of the air outlet openings 42 is for example 0,25 times the area of the air inlet opening 40. The width of each air outlet opening 42 is chosen to minimize pressure loss.

The end face of the tubular member 36 next to the air outlet openings 42 is closed by a closing part 46. The closing part 46 is made in one piece with the tubular member 36. The surface of the closing part 46 facing the air inlet opening 40 is flat.

The tubular member 36 has a circular internal cross-section, for example. The tubular member 36 has a reduction of the internal cross-section in the form of a step 48 behind the air inlet opening 40 when viewed from the air inlet opening 40 to the air outlet openings 42, that is, in the air flow direction downstream of the air inlet opening 40. Viewed from the air inlet opening 40 to the air outlet openings 42, behind the reduction of internal cross-section, namely the step 48, the tubular member 36 has a constant internal cross-section with a constant internal diameter 50. The ratio between an internal length 52 and the internal diameter 50 of the tubular member 36 is chosen for optimal noise reduction.

During the operation of the vacuum pump 10 the air to be cleaned, that is the air-oil-mixture, flows through the air inlet opening 40 into the interior of the tubular member 36. Due to the form and dimension of the tubular member 36, the air inlet opening 40 and the air outlet openings 42, noise generated by the airflow is reduced.

The air to be cleaned leaves the tubular member 36 through the air outlet openings 42 and enters the interior 30 of the filter medium 28. From there, the air to be cleaned flows through the filter medium 28 and is cleaned.

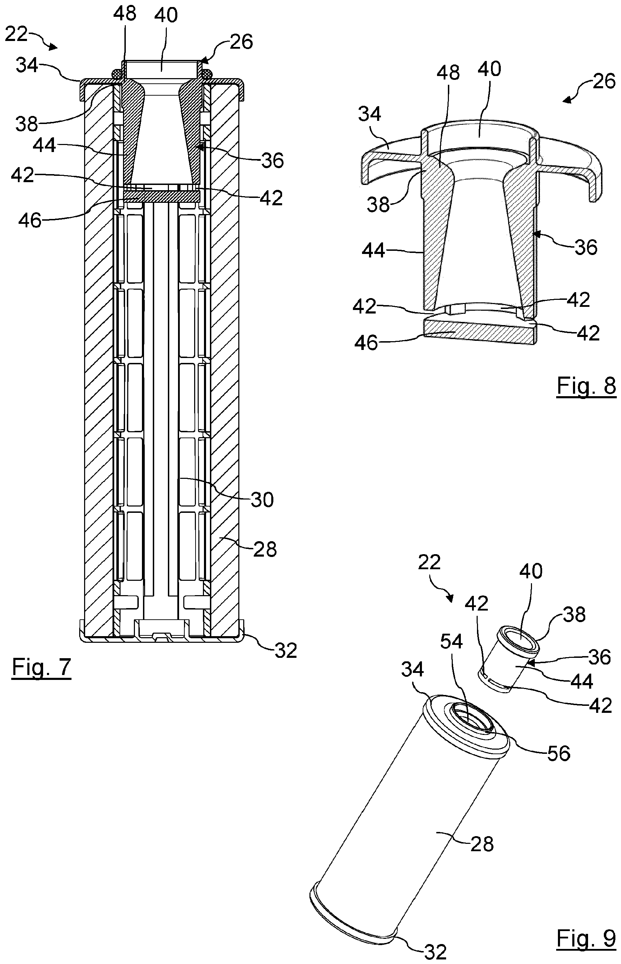

In figures 7 and 8 aspects of a sound attenuator 26 according to the invention are shown. Those elements which are similar to those of figures 2 to 6 are provided with the same reference signs. The sound attenuator 26 of Figures 7 and 8 differs from the sound attenuator shown in Figures 2 - 6 in that the internal cross-section of the tubular member 36 continuously decreases downstream of the reduction of the internal cross-section, namely the step 48.

In figure 9 a third aspect of a sound attenuator 26 is shown. Those elements which are similar to those of the first aspect of figures 2 to 6 are provided with the same reference signs. The third aspect differs from the first aspect in that the sound attenuator 26 is a separate part attached to the inlet end plate 34 of the air de-oiling device 22.

The tubular member 36 includes a connection member 38 in form of a collar near the air inlet opening 40. The collar surrounds the air inlet opening 40 on the radially outer circumferential side of the tubular member 36. When assembling, the tubular member 36 is inserted into a receiving opening 54 of the inlet end plate 34. The connection member 38 is connected with an end plate connection member 56, which surrounds the receiving opening 54 of the inlet end plate 34.

## Claims

1. A sound attenuator (26) for a separator device (22) for gas, comprising at least one tubular member (36) having at least one gas inlet opening (40) in the area of one end and at least one gas outlet opening (42) in the area of the other end, **characterized in that** the at least one gas outlet opening (42) is placed in the circumferential wall (44) of the at least one tubular member (36) near the one end and the end face at this end of the at least one tubular member (36) is closed by a closing part (46).

2. A sound attenuator according to claim 1, **wherein** the surface of the closing part (46) facing the at least one gas inlet opening (40) is flat and/or the closing part (46) is made in one piece with the at least one tubular member (36).

3. A sound attenuator according to claim 1 or 2, **wherein** multiple gas outlet openings (42) are arranged in a circumferential wall (44) of the tubular member (36) and/or at least two gas outlet openings (42) are arranged at opposite sides of a circumferential wall (44) of the tubular member (36) and/or at least two gas outlet openings (42) have the same size and/or shape and/or opening area.

4. A sound attenuator according to one of the previous claims, **wherein** at least one gas inlet opening (40) is arranged at the end face of the at least one tubular member (36).

5. A sound attenuator according to one of the previous claims, **wherein** the at least one tubular member (36) as a circular internal cross-section.

6. A sound attenuator according to one of the previous claims, **wherein** the at least one tubular member (36) has a reduction (48) of the internal cross-section when viewed from the at least one gas inlet opening (40) to the at least one gas outlet opening (42).

7. A sound attenuator according to one of the previous claims, **wherein** the at least one tubular member (36) at least partly as a constant internal cross-section and/or the internal cross-section of the at least one tubular member (36) decreases in at least a portion of the tubular member (36) viewed from the at least one gas inlet opening (40) to the at least one gas outlet opening (42).

8. A sound attenuator according to one of the previous claims, **wherein** the at least one tubular member (36) comprises a connection member (38) for connecting to an end member (34), in particular an end plate, of the separator device (22) and/or the at least one tubular member (36) is connected, in particular connected in one piece, to an end member (34), in particular an end plate, for the separator device (22).

9. A sound attenuator according to one of the previous claims, **wherein** a total area of the gas outlet openings (42) is between 0,2 and 3 times the area of the at least one gas inlet opening (40).

10. A separator device (22) for gas, comprising at least one separating medium (28) surrounding an interior (30) of the separator device (22) and at least one sound attenuator (26) serving as a gas conduit to the interior (30), where the sound attenuator (26) comprising at least one tubular member (36) having at least one gas inlet opening (40) in the area of one end and at least one gas outlet opening (42) in the area of the other end, where the at least one tubular member (36) extends at least partly into the interior (30) of the separator device (22), **wherein** the at least one sound attenuator (26) is a sound attenuator (26) according to one of the previous claims.

11. A separator device according to claim 10, **wherein** the at least one sound attenuator (26) is a separate part attached to an end member (34), in particular an end plate, covering the at least one separating medium (28), or the at least one sound attenuator (26) is in one piece with an end member (34), in particular an end plate, covering the at least one separation medium (28).

12. A separator device according to claim 10 or 11, **wherein** the separator device (22) is a gas de-oiling device, in particular an air de-oiling device, and/or the separator device (22) is an air de-oiling device for an air compressor or a vacuum pump (10).
